# FASCICULE DE BREVET EUROPEEN

(11) **EP 0 562 909 B1**
(45) Date de publication et mention de la délivrance du brevet: **03.01.1996**
(21) Numéro de dépôt: 93400652.9
(22) Date de dépôt: 15.03.1993
(51) Int. Cl.: H02K 11/00, H02K 5/22, H01R 4/30

(54) **Dispositif à borne de prise de courant pour alternateur de véhicule automobile**
Anschlussklemmen für Drehstromgenerator eines Fahrzeuges
Electrical terminal for vehicle A.C. generator

(30) Priorité: 24.03.1992 FR 9203502
(43) Date de publication de la demande: 29.09.1993
(73) Titulaire: VALEO EQUIPEMENTS ELECTRIQUES MOTEUR, F-94000 Creteil (FR)
(72) Inventeur: Andre, Eric, F-94000 Creteil (FR); Abadia, Roger, F-93360 Neuilly Plaisance (FR)
(74) Mandataire: Gamonal, Didier

(56) Documents cités:
- WO-A-91/03836
- DE-A- 3 624 938
- FR-A- 2 629 287

## Description

La présente invention concerne un dispositif à borne de prise de courant pour alternateur de véhicule automobile.

Un tel alternateur comprend notamment un pont redresseur triphasé redressant la tension de sortie de l'alternateur. De manière connue en soi, le pont redresseur triphasé est associé à un régulateur contrôlant la tension d'alimentation de la bobine excitatrice de l'alternateur.

Une ou plusieurs bornes de prise de courant sont également ménagées sur l'alternateur afin de pouvoir effectuer les différentes connexions nécessaires au fonctionnement et au contrôle de l'ensemble.

En général, les bornes de prise de courant se présentent sous la forme de boulons, solidaires le plus souvent du pont redresseur, recevant à l'une de leurs extrémités une cosse sertie à l'extrémité d'un conducteur électrique, ladite cosse étant maintenue en position par un écrou vissé sur l'extrémité du boulon.

Sans précaution particulière, lors du serrage de l'écrou sur la vis pour réaliser la connexion, le couple de serrage exercé peut être supérieur au couple de serrage exercé par l'autre extrémité du boulon, ce qui entraîne une rotation de la borne sur elle-même et la rend par la suite très difficilement déconnectable.

Pour remédier à cet inconvénient, on a proposé de ménager, à l'une des extrémités du boulon, des cannelures longitudinales qui, par un montage à force, empêchent la rotation de la borne.

Cependant, le couple de serrage exercé lors du serrage de l'écrou sur la vis peut être supérieur au couple résistant exercé par les cannelures, ce qui entraîne là encore une rotation de la borne sur elle-même.

La présente invention résout ces problèmes et propose à cet effet un dispositif à borne de prise de courant pour alternateur de véhicule automobile comprenant un ensemble redresseur constitué d'au moins un élément redresseur, au moins une borne de prise de courant se présentant sous la forme d'un boulon fixé sur l'élément redresseur par un canon métallique, l'ensemble redresseur étant recouvert par un capot ne laissant apparaître que l'extrémité du boulon, afin qu'une cosse montée à l'extrémité d'un conducteur électrique puisse y être fixée par un écrou, des moyens de blocage en rotation de la borne étant interposés entre l'écrou et le canon métallique, caractérisé en ce que lesdits moyens sont constitués d'une entretoise enfilée sur l'extrémité du boulon présentant une première extrémité hexagonale raccordée par une partie cylindrique à une seconde extrémité tronconique, la première extrémité hexagonale coopérant avec une partie de forme hexagonale complémentaire d'un logement ménagé de matière dans le capot.

Selon une autre caractéristique de l'invention l'extrémité tronconique présente, côté partie cylindrique, un diamètre supérieur au diamètre de ladite partie cylindrique de manière à former un épaulement de retenue.

Selon une autre caractéristique de l'invention le logement comprend, à l'intérieur du capot, un fût cylindrique à l'intérieur duquel sont agencés une pluralité d'appendices destinés à coopérer avec l'épaulement de retenue de l'entretoise de manière à rendre ladite entretoise imperdable.

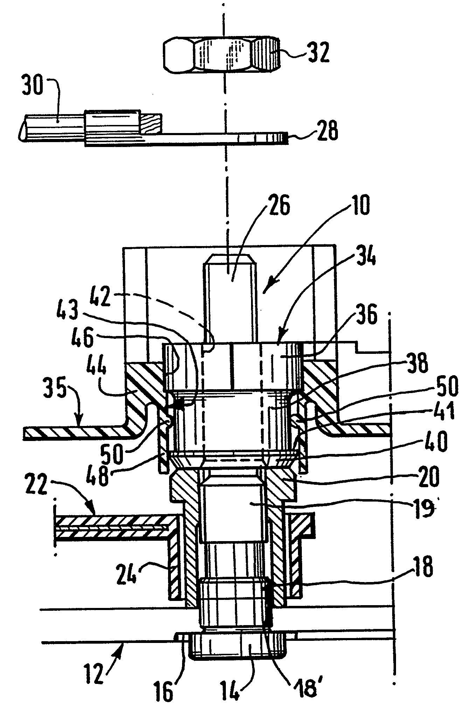

L'invention sera mieux comprise à la lecture de la description qui va suivre en regard de la figure unique qui est une coupe partielle de l'ensemble d'un dispositif à borne de prise de courant suivant l'invention.

On se réfère à la figure unique sur laquelle on a représenté une borne de sortie 10 qui peut être soit la borne "B+" qui doit être connectée à la borne positive de la batterie du véhicule, soit la borne "B-" qui doit être connectée à la borne négative de la batterie ou à la masse du véhicule si la borne négative de la batterie l'est également.

En considérant dans l'exemple représenté qu'il s'agit de la borne "B+", celle-ci est fixée sur l'élément redresseur positif 12, d'un ensemble redresseur qu'elle traverse par un trou ménagé à cet effet et se présente sous la forme générale d'un boulon.

Plus précisément, la borne 10 comprend une tête 14 prenant appui dans un lamage 16 de l'élément redresseur positif 12. La borne 10 présente, à proximité de la tête 14, des moyens permettant de la rendre solidaire en rotation de l'élément redresseur 12. Ces moyens sont constitués de cannelures longitudinales 18 destinées à coopérer avec des cannelures 18' de forme complémentaire ménagées dans l'élément redresseur 12. La borne 10 comporte également une partie filetée 19 sur laquelle vient se visser un canon métallique 20.

L'ensemble ainsi constitué traverse un connecteur 22 présentant, au droit du canon métallique 20, un canon isolant 24.

L'extrémité 26 de la borne 10, opposée à la tête 14, est filetée et est destinée à recevoir une cosse 28 sertie à l'extrémité d'un conducteur électrique 30 et maintenue en place par un écrou 32.

Un capot 35, réalisé par moulage en matière plastique, entoure l'ensemble redresseur de manière à le protéger des agressions mécaniques liées au milieu dans lequel l'alternateur doit fonctionner.

Afin d'empêcher toute rotation sur elle-même de la borne 10, lors du serrage de l'écrou 32 sur l'extrémité filetée 26, celle-ci est équipée, selon l'invention, de moyens de blocage en rotation.

Ceux-ci sont constitués par une entretoise métallique 34 dont une première extrémité 36 présente une forme hexagonale. L'extrémité 36 est prolongée par une partie cylindrique 38 se raccordant à une seconde extrémité 40 qui est de forme tronconique. L'entretoise 34 comprend également un alésage central 42 destiné à laisser passer l'extrémité 26 de la borne 10.

Cette entretoise métallique 34 coopère avec un logement 43 ménagé de moulage dans le capot 35.

Dans l'exemple représenté, ce logement 43 est situé à l'intérieur d'un bossage circulaire 44. A la partie supérieure du bossage 44, le logement 43 comprend une partie 46 de forme hexagonale destinée à recevoir l'extrémité hexagonale 36 de l'entretoise 34.

Le logement 43 se prolonge vers l'intérieur du capot 35 par un fût cylindrique 48 constitué d'une paroi mince venue de moulage avec le capot 34.

A l'intérieur du fût cylindrique 48 sont ménagés de matière une pluralité d'appendices 50 répartis angulairement de manière uniforme et situés à mi-hauteur du fût cylindrique 48.

L'extrémité tronconique 40 présente, côté partie cylindrique 38, un diamètre sensiblement égal au diamètre intérieur du fût cylindrique 48 et supérieur au diamètre de la partie cylindrique 38 de manière à former un épaulement de retenue 41.

Le montage d'un tel dispositif est le suivant. Le boulon 10 étant en place sur l'élément redresseur positif 12, on visse le canon métallique 20 à travers le connecteur 22 sur les parties filetées 18,18' jusqu'à ce qu'il vienne en butée sur la face supérieure de l'élément redresseur 12.

Le capot 35 étant mis en place sur l'ensemble redresseur, on introduit dans le logement 43 prévu à cet effet l'entretoise 34. Son extrémité tronconique 40 pénètre à l'intérieur du fût cylindrique 48 et franchit par élasticité dudit fût les appendices 50. En poursuivant le mouvement de haut en bas sur la figure, l'extrémité tronconique 40 vient en butée avec la face supérieure du canon métallique 20 et, simultanément, l'extrémité hexagonale 36 vient coopérer avec la partie hexagonale 46 ménagée dans le logement 43 du capot 35.

Il suffit alors de mettre en place la cosse 28 et d'assurer sa fixation par vissage de l'écrou 32.

La coopération des parties hexagonales 36,46 empêche toute rotation de la borne 10.

Le fait que l'extrémité tronconique 40 de l'entretoise 34 ait franchi les appendices 50 rend ladite entretoise 34 imperdable par l'épaulement de retenue 41.

Dans l'exemple représenté, le logement agencé dans le capot 35 est ménagé dans un bossage en surplomb mais peut tout aussi bien être agencé complètement à l'intérieur du capot 35 sans pour cela sortir du cadre de l'invention telle que définie dans les revendications suivantes.

## Revendications

1. Dispositif à borne de prise de courant pour alternateur de véhicule automobile comprenant un ensemble redresseur constitué d'au moins un élément redresseur (12), au moins une borne de prise de courant (10) se présentant sous la forme d'un boulon fixé sur l'élément redresseur (12) par un canon métallique (20), l'ensemble redresseur étant recouvert par un capot (35) ne laissant apparaître que l'extrémité (26) du boulon (10), afin qu'une cosse (28) montée à l'extrémité d'un conducteur électrique (30) puisse y être fixée par un écrou (32), des moyens de blocage en rotation de la borne (10) étant interposés entre l'écrou (32) et le canon métallique (20), caractérisé en ce que lesdits moyens sont constitués d'une entretoise (34) enfilée sur l'extrémité (26) du boulon (10) présentant une première extrémité hexagonale (36) raccordée par une partie cylindrique (38) à une seconde extrémité tronconique (40), la première extrémité hexagonale (36) coopérant avec une partie (46) de forme hexagonale complémentaire d'un logement (43) ménagé de matière dans le capot (35).

2. Dispositif selon la revendication 1, caractérisé en ce que l'extrémité tronconique (40) présente, côté partie cylindrique (38), un diamètre supérieur au diamètre de ladite partie cylindrique (38) de manière à former un épaulement de retenue (41).

3. Dispositif selon la revendication 2, caractérisé en ce que le logement (43) comprend, à l'intérieur du capot (35), un fût cylindrique (48) à l'intérieur duquel sont agencés une pluralité d'appendices (50) destinés à coopérer avec l'épaulement de retenue (41) de l'entretoise (34) de manière à rendre ladite entretoise (34) imperdable.

4. Dispositif selon l'une des revendications précédentes, caractérisé en ce que le logement (43) est agencé au moins en partie dans un bossage (44) du capot (35).

5. Dispositif selon l'une des revendications précédentes, caractérisé en ce que la borne (10) comporte des cannelures (18) destinées à coopérer avec des cannelures (18') de l'élément redresseur (12).

## Patentansprüche

1. Anschlußklemmenvorrichtung für den Drehstromgenerator eines Kraftfahrzeugs, die eine Gleichrichtereinheit, bestehend aus mindestens einem Gleichrichterelement (12), enthält, wobei mindestens eine Anschlußklemme (10) in Form einer Schraube vorliegt, die am Gleichrichterelement (12) durch eine Metallhülse (20) befestigt ist, wobei die Gleichrichtereinheit durch eine Kappe (35) umschlossen ist, aus der nur das Ende (26) der Schraube (10) hervorsteht, um einen am Ende eines Stromleiters (30) angebrachten Kabelschuh (28) mit einer Mutter (32) daran befestigen zu können, wobei Mittel zur Drehsicherung der Klemme (10) zwischen der Mutter (32) und der metallhülse (20) eingesetzt sind, **dadurch gekennzeichnet**, daß die besagten Mittel aus einem Zwischenstück (34) bestehen, das am Ende (26) der Schraube (10) aufgesetzt wird und ein sechskantförmiqes erstes Ende (36) aufweist, das sich Über einen zylindrischen Teil (38) an ein kegelstumpfförmiges zweites Ende (40) anschließt, wobei das sechskantförmiqe erste Ende (36) mit einem in dazu passender Sechskantform ausgeführten Teil (46) einer Aufnahme (43) zusammenwirkt, die einstückig in der Kappe (35) vorgesehen ist.

2. Vorrichtung nach Anspruch 1 , **dadurch gekennzeichnet,** daß das kegelstumpfförmige Ende (40) auf der seite des zylindrischen Teils (38) einen Durchmesser aufweist, der größer als der Durchmesser des besagten zylindrischen Teils (38) ist, so daß eine Halteschulter (41) gebildet wird.

3. Vorrichtung nach Anspruch 2 , **dadurch gekennzeichnet,** daß die Aufnahme (43) im Innern der Kappe (35) einen zylindrischen Schaft (48) umfaßt, in dessen Innern eine Mehrzahl von Ansätzen (50) angeordnet sind, um mit der Halteschulter (41) des Zwischenstücks (34) zusammenzuwirken, so daß das besagte Zwischenstück (34) unverlierbar wird.

4. Vorrichtung nach einem der vorangehenden Ansprüche, **dadurch gekennzeichnet**, daß die Aufnahme (43) wenigstens teilweise in einem Vorsprung (44) der Kappe (35) angeordnet ist.

5. Vorrichtung nach einem der vorangehenden Ansprüche, **dadurch gekennzeichnet,** daß die Klemme (10) Rillen (18) umfaßt, die für das Zusammenwirken mit Rillen (18') des Gleichrichterelements (12) bestimmt sind.

## Claims

1. Device with an electrical terminal for a motor vehicle alternator comprising a rectification assembly consisting of at least one rectifier element (12), at least one electrical terminal (10) taking the form of a bolt fixed to the rectifier element (12) by means of a metal barrel (20), the rectification assembly being covered with a cap (35) which leaves only the end (26) of the bolt (10) visible, so that a lug (28) mounted at the end of an electrical conductor (30) can be fixed thereto by means of a nut (32), means of locking the rotation of the terminal (10) being interposed between the nut (32) and the metal barrel (20), characterised in that the said means consist of a brace (34) slipped on the end (26) of the bolt (10) and having a first, hexagonal end (36) connected by a cylindrical part (38) to a second, tapered end (40), the first, hexagonal end (36) cooperating with a part (46) of complementary hexagonal shape of a housing (43) formed in the body of the cap (35).

2. Device according to Claim 1, characterised in that the tapered end (40) has, on the side next to the cylindrical part (38), a diameter greater than the diameter of the said cylindrical part (38), so as to form a retaining shoulder (41).

3. Device according to Claim 2, characterised in that the housing (43) comprises, inside the cap (35), a cylindrical shaft (48) inside which there are arranged a plurality of appendages (50) designed to cooperate with the retaining shoulder (41) of the brace (34) so as to make the said brace (34) captive.

4. Device according to one of the preceding claims, characterised in that the housing (43) is arranged at least partly in a protrusion (44) on the cap (35).

5. Device according to one of the preceding claims, characterised in that the terminal (10) has flutes (18) designed to cooperate with flutes (18') on the rectifier element (12).
